# EUROPEAN PATENT SPECIFICATION

(11) **EP 1 397 040 B1**
(45) Date of publication and mention of the grant of the patent: **29.12.2004**
(21) Application number: 02727786.2
(22) Date of filing: 10.06.2002
(51) Int. Cl.: A01M 25/00

(54) **RODENT BAIT STATION**
KÖDERSTATION FÜR NAGETIERE
APPAREIL D'APPAT DE RONGEURS

(30) Priority: 16.06.2001 GB 0114790; 07.02.2002 GB 0202788
(43) Date of publication of application: 17.03.2004
(73) Proprietor: Reckitt Benckiser Inc., Wayne, New Jersey 07474 (US)
(72) Inventor: DELLEVIGNE, Laura, A., Morris Township, NJ 07960 (US); SALMON, Scott, Hoboken ,NJ 07030 (US); WATTS, Eric Nelson, NY, NY 10002 (US); TURCHI, Mario, Alexander, Tenafly, NJ 07670 (US)
(74) Representative: McKnight, John Crawford
(86) International application number: PCT/GB2002/002698
(87) International publication number: WO 2002/102147

(56) References cited:
- US-A- 3 352 053
- US-A- 5 806 237
- US-A- 5 857 286
- US-A- 6 082 042

## Description

The present invention relates to a rodent bait station for the administration of a rodenticidal composition to rodents, i.e., rats and mice.

Rodents, in particular rats and mice are a plague, desirably to be avoided. As is well known throughout the civilized world, rodents are known to be destructive and at the same time to be carriers among desired diseases. The rodent population in homes, residences, public places, and especially in storage facilities where foods are to be stored need be effectively controlled in order to limit destruction caused by these animals, and at the same time to limit the transmission of diseases which may ultimately, undesirably effect the human population.

Various forms of devices and means are known for the control of rodents. Such as traditional spring-loaded mouse trap are well known, are simple in use, and are quite effective. These inexpensive devices are limited in that once set, they can only kill one rodent at a time. Subsequent to a kill, the trap needs to be unloaded (an undesirable operation to many persons) and then reset in preparation for the next kill. An alternative means which is also widely used is in the administration of rodenticides to rodents. Such rodenticides are compounds which are toxic to rodents, and are typically mixed with a bait composition. These bait compositions are often grain based, and may further include an attractant. Ideally the rodents will choose to ingest the bait composition laced with the rodenticide and eventually ingest sufficient rodenticide such that the rodent expires. While such rodenticide laced bait compositions are known to be effective, they are not without their drawbacks. Safety is a primary concern, particularly when such rodenticide compositions may be used in environments where children may be present and/or wherein house pets, particularly dogs, cats and other domesticated animals may encounter such bait compositions. While the rodenticidal composition is rarely lethal to humans, or domesticated animals, the toxicity of the rodenticide is a concern.

In order to effectively administer such rodenticide compositions, the prior art has suggested several forms of bait housing, see e.g. document US-A-6,082,042, which discloses a base, a cover hingedly attached to said base, an interior sidewall separating a passage portion from a bait chamber portion, and a portal through said sidewall. In their simplest forms, these are little more than enclosed chambers which have at least one entrance/exit through which a rodent may pass. Within this enclosed chamber is a rodenticidal composition, typically in the form of a bait matrix. Such housings are generally configured such that only rodents may pass into their interior, hopefully to ingest a sufficiently lethal dose of the rodenticide, and either expire within the housing or exit the housing to expire thereafter. However, these housings are also intended to deny access by small children, as well as to domesticated house pets to the rodenticide laced bait matrix. In this way, effective delivery of the rodenticide to rodents is provided, while at the same time, safe administration is assured.

While rodent bait stations are known in the art, there yet remains a real and continuing need in the art for improved rodent bait stations.

This aim is achieved with the rodent bait station according to claim 1.

Preferred features of the invention are set out in the dependent claims.

### Brief Description of the Drawings

Fig. 1 shows a perspective view of a first embodiment of the rodent bait station according to the present invention.
Fig. 2 shows the bait station of Fig. 1 in a fully open position.
Fig. 3 illustrates a bait station according to the present invention in a partially open position, and further depicts the locking key and mechanism.
Fig. 4 illustrates the underside of the bait station according to Fig. 2.
Figs. 5A and 5B illustrate end views of opposite sides of the bait station according to Fig. 1.
Figs. 6A and 6B illustrate an enlarged detail the key and lock portions of the bait station depicted in Figs. 1-5A, 5B.
Fig. 7 shows an alternative embodiment of a rodent bait station in a fully open position.

According to one aspect of the invention, there is provided an improved rodent bait station.

According to a further aspect of the invention, there is provided a rodent bait station having a base portion which is divided into a passage portion, and into a chamber portion, and which has hingedly attached a hingeable cover which has two portions, a passage cover portion hingedly attached at one side to the base portion and a chamber cover hingedly attached to the passage cover portion.

In a further aspect of the invention, there is provided a rodent bait station having a base, hingedly attached to a two-part cover wherein a first part of the two-part cover when closed upon a corresponding part of the base defines a passage and wherein the second part of the two-part cover when closed upon a corresponding portion of the base defines a bait chamber.

In a still further aspect of the invention there is provided a lockable, rodent bait station which may be safely filled, set in a suitable location, and safely periodically monitored for the ingestion of a rodenticide.

These and other aspects of the invention will become more apparent from a review of the accompanying drawings, as well as from a reading of the detailed description and the description of the preferred embodiments of the present invention.

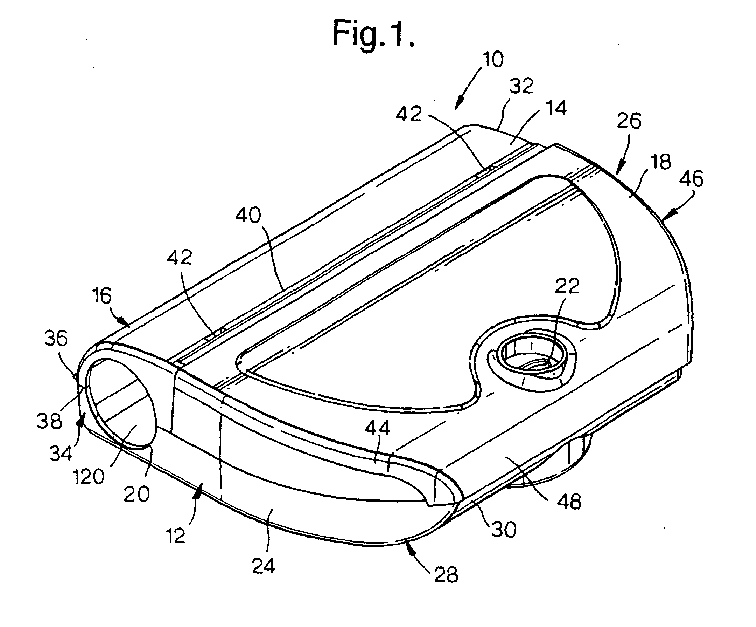

Turning now to Fig. 1, there is depicted a rodent bait station (10) according to the present invention. The bait station includes a base (12) and a two-part cover (14) which includes a passage cover (16) portion and a bait chamber cover portion (18). As can be seen from the drawing, the rodent bait station (10) also includes at least one portal (20) within at least a portion of the bait station, ideally towards the rear of the rodent bait station (10) adapted for the admission of a rodent, i.e., a rat or a mouse. According to one preferred embodiment, the rodent bait station also includes a lock adapted for lockably closing the two-part cover (14) upon the base (12) such that the two-part cover (14) cannot be readily opened without the use of an appropriate key for releasing the lock. While this lock is not fully visible in Fig. 1, a keyhole (22) is depicted passing at least through a portion of the bait chamber cover (18). As can be further seen, the rodent bait station (10) includes a pair of sidewalls (24, 26) which are dependent from the floor (28) of the base (12) and, from which further depends a front wall (30). In Fig. 1, this front wall (30) is seen to be an arcuate surface which intersects the sidewalls (24, 26), however, it is to be clearly understood that from other embodiments, that the front wall (30) may be generally perpendicular with the floor (28) as well as with the sidewalls (24, 26). It is to be understood that these three sidewalls (24, 26, 30) define, in conjunction with an inner wall (not shown in Fig. 1), a portion of the bait matrix chamber (not shown in Fig. 1).

Defined by a rearward portion of the sidewall (12) and the passage cover portion (16) of the two-part cover (14) is a portal (20) suitably dimensioned to allow for scurrying rodents to enter the rodent bait station (10). Although only one entrance portal (20) is seen in Fig. 1, it is to be understood that a correspondingly sized further entrance portal (32) is present at the opposite side of the rodent bait station (although not visible in Fig. 1). A passage of the rodent bait station is found to extend along the back of the rodent bait station (10). This passage is defined by a portion of the floor (28), from which upwardly depends a rear wall (34). The rear wall (34) extends upwardly until it terminates in the vicinity of the hinge (36). One part of this hinge (36) is attached to the rear wall (34) while the other part is attached to the passage cover portion (16) of the two-part cover (14). The passage cover (16) extends forwardly, i.e., towards the direction of the front wall (30), until it terminates at a front margin (40). A second hinge (42) is affixed to the front margin (40) of the passage cover (16), as well as to the bait chamber cover portion (18) of the two-part cover (14). The position of the top margin (40) coincides with the top edge of an inner wall (not visible in Fig. 1) which extends upwardly from the floor (28) towards the front margin (40) of the passage cover (16) when the passage cover portion (16) is closed upon the corresponding portion of the base (12), a rodent passageway (120) is defined by the floor (28), the inner wall, the rear wall (34) and the passage cover (16). Similarly, when the two-part cover (14) is closed upon the base (12), the bait matrix chamber (not visible in Fig. 1) of the rodent bait station extends forwardly of this inner wall and is defined by this inner wall, the side walls (24, 26), the front wall (30), the floor (28) and the bait chamber cover portion (18) of the two-part cover (14). As can be seen from Fig. 1, in its closed position, the rodent bait station (10) provides no access to the interior but for the two portals (20, 32) which are intended to only permit for the admission of scurrying rodents.

As can further be seen from Fig. 1, according to preferred embodiments of the invention, the bait matrix chamber cover (18) includes downwardly extending overlapping margins (44, 46) which extend over portions of their corresponding sidewalls (24, 26). Similarly, a portion of the front edge (48) of the bait chamber cover (18) may also extend downwardly and overlap a portion of the front wall (30). In this way, it will be realized that these downwardly extending margins (44, 46, 48) encourage proper alignment when the rodent bait station (10) is closed. Also, these downwardly extending margins deny ready admission of the end of a tool, e.g., such as might be used by an inquisitive child in order to pry apart the two-part cover (14) and the base (12) of the rodent bait station (10).

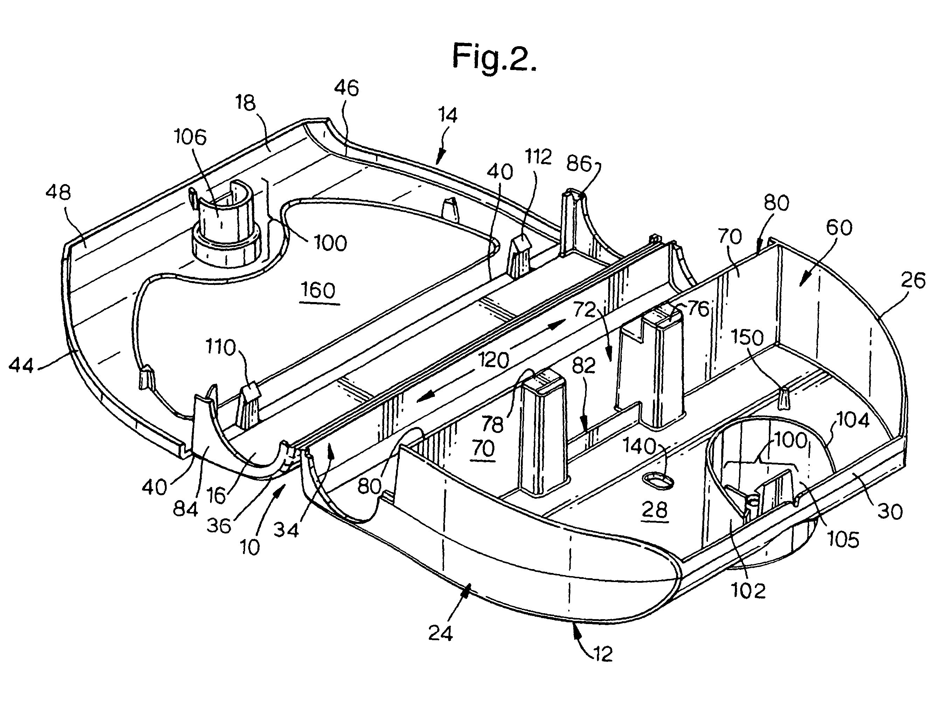

Turning now to Fig. 2, there is depicted the rodent bait station (10) in its fully opened position. As can be now seen more clearly, the bait matrix chamber (60) is bounded by the floor (28), the left side wall (24), the right side wall (26), the front wall (30) and the inner wall (70), depending upwardly from the floor (28). The inner wall (70) also includes an inner portal (72) which in this embodiment approximately bisects the inner wall (70). The inner portal (72) is bounded at opposite sides by posts (76, 78) which extend upwardly from the floor (28) and which terminate at top margin (80) of the inner wall (70). It is to be understood, however, that according to the preferred embodiment depicted in Fig. 2, these posts (76, 78) are present, although they need not be present in every embodiment according to the present invention. They do, however, conveniently provide vertical rigidity to the rodent bait station (10) and help resist inadvertent crushing of the rodent bait station (10) if unintentionally stepped upon by an individual or otherwise subjected to a heavy vertical load. This inner portal (72) also includes a threshold (82) also depending upwardly from the floor (28) and which is essentially shown to be coincident with the plane of the inner wall (70). Again, this is a feature which is present according to this preferred embodiment of the invention, but a threshold need not be present according to every working embodiment of the instant invention.

With regard to the inner portal (72) it is only required that the inner wall (70) include a suitably dimensioned interruption or passage therethrough which would permit the admission of a rodent into the bait matrix chamber (60) from the passage of the rodent bait station (10). Indeed, a plurality of suitably sized inner portals may also be present, although it has been found that a single inner portal is typically sufficient.

A further detail more evident from Fig. 2 is a lower portion (105) of a lock (100) which is positioned on the base (12) near the front wall (30). As can be seen in the figure, a shield wall (102) extends from the front wall (30) inwardly, i.e., in the direction of the back wall (34), and is intended to provide a sufficient physical barrier between the interior of the bait matrix chamber (60) and the lock (100) such that an inquisitive rodent present within the bait matrix chamber (60) could not easily release the lock (100). This shield wall (102) desirably thus extends not only rearwardly from the front wall (30) but also upwardly from the floor (28) and includes a top margin (104) which has a shape adapted to conform to the underside of the bait chamber cover (18) when the rodent bait station (10) is in a fully closed and locked position.

Additionally, although not necessary to the successful practice of the invention, there is shown an anchoring hole (140) passing through the floor (28) of the bait chamber. Such an anchoring hole is usually conveniently dimensioned for the insertion of a screw, nail, or other fastener such that once the rodent bait station (10) is positioned on a substrate (floor, etc.) the fastener is passed through the anchoring hole (140) so to anchor the rodent bait station (10) to said substrate. The rodent bait station (10) can also be secured to the substrate by the use of a double sided adhesive, one side of which is adhered to exterior surface of floor (28) and the other side adhered to the substrate.

Further depicted in Fig. 2 is a mounting post (150) which extends upwardly from the floor (28). The dimensions of this mounting post (150) are not critical, however, a configuration having sloping sides such as the frustoconical configuration shown in Fig. 2 is convenient. The function of this mounting post (150) is to provide a point of attachment for a bait matrix. Where such a bait matrix is in the form of a three-dimensional solid, i.e., a block, a hole may be conveniently provided in said bait matrix, and the hole inserted upon the mounting post (150) to thus relatively immobilize the movement of the bait matrix within the matrix chamber. Importantly this mounting post (150) may also be helpful in resisting the removal of a bait matrix from the rodent bait station (10) by a rodent who may have taken a particular liking towards the rodenticide-laced bait matrix.

With regard now to the two-part cover (14), as can be seen from this underside view the base (12) and the two-part cover (14) are hingedly joined at a hinge (36). In this depiction, a "living hinge" is depicted. However, it is to be understood that any other hinge-type mechanism, including a conventional knuckled hinge with a connecting rod may be used in its place.

What can also be seen, albeit less visibly, is the position of the second hinge (42) at the front margin (40) of the passage-part (16). As can be readily understood from Fig. 2, the left side wall (84) and the right side wall (86) portions of the passage cover (16) include a configuration adapted to cooperate with a corresponding configuration of the side walls (24, 26) of the base (12) so that when joined together, portals (20, 32) are provided. As has been discussed with reference to Fig. 1, a singular entrance portal can be provided, but according to preferred embodiments of the invention, two portals (20, 32) are provided at opposite sides of the rodent bait station (10). Preferably, as is also depicted on Figs. 1 and 2, the rodent passageway (120) is generally linear although at least one portion of this passage on the interior of the rodent bait station (10) is interrupted by the inner portal (72) which communicates with the interior of the bait chamber (60).

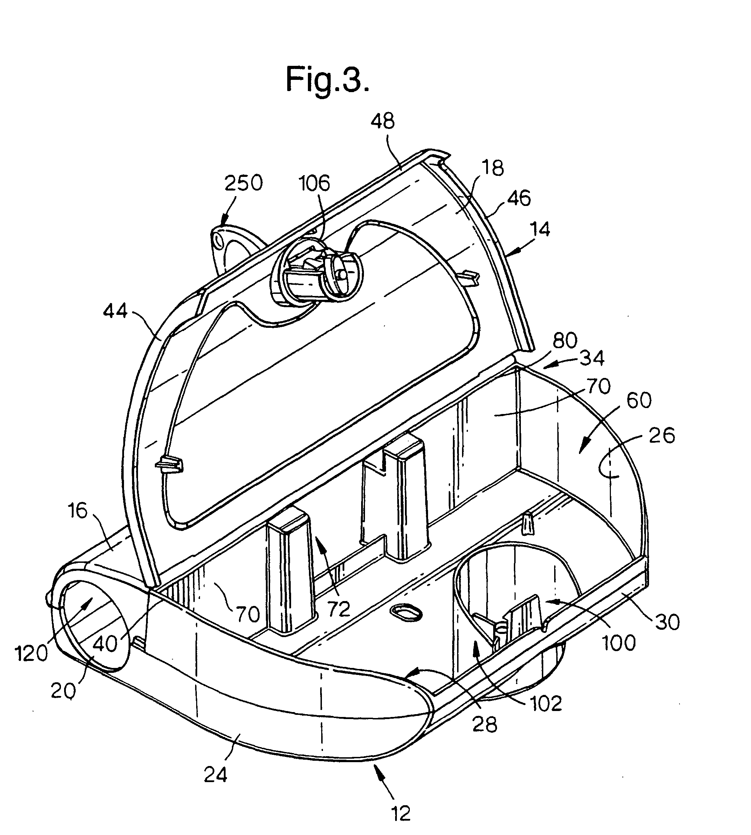

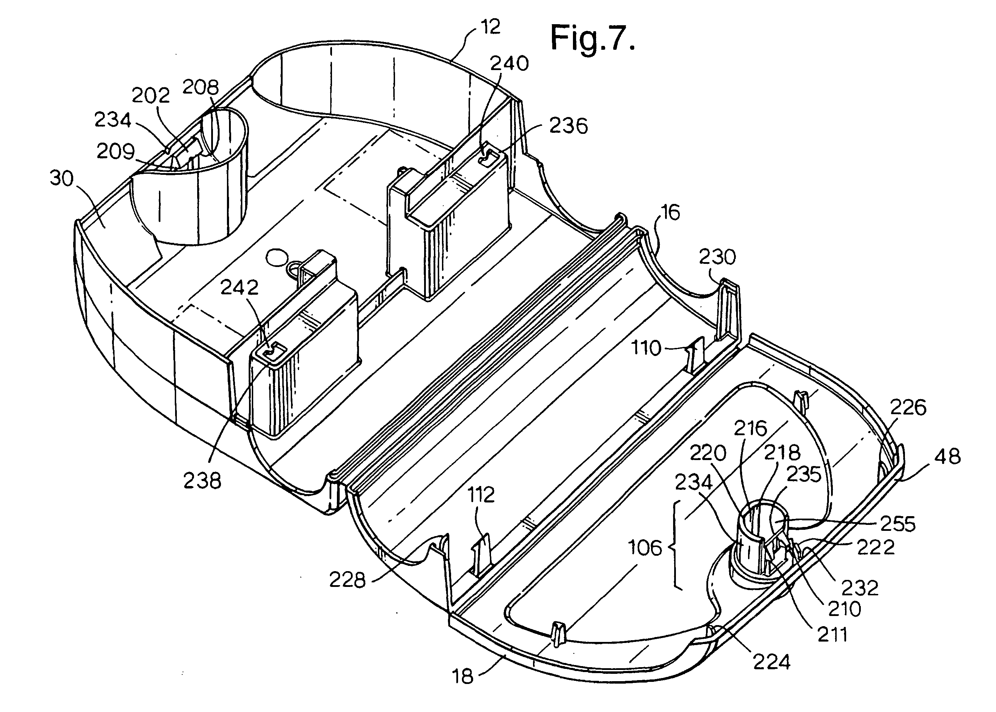

Also, according to this preferred embodiment of the invention, snap-lock tabs (110, 112) are provided which when at least the passage cover (16) is closed upon a corresponding part of the base (12), a positive lock is achieved. Here, an upwardly extending pair of snap-locking tabs (110, 112) are depicted. However, it is to be understood that other devices be used to releasably lock may also be used in place of those depicted. More detail on the operation of the snap-lock tabs (110, 112) can be seen with reference to Figs. 3 and 7, and accompanying text.

As can also be seen more clearly from this figure, the overlapping downwardly-extending margins (44, 46, 48) are shown depending from the bait chamber cover (18). Further, extending downwardly from the bait chamber cover (81) is the upper portion (106) of the lock (100).

According to a preferred embodiment of the invention, the bait chamber cover (18) may include a portion (160) which is polished so that the interior of the bait matrix chamber (60) can be seen. It is to be understood that this portion (160) does not have to be polished, making this portion (160) opaque.

In another embodiment of the invention, the bait chamber cover (18) may include a portion (160) which is made of a different material of construction that that used for the remaining part of the bait chamber cover (18) of the rodent bait chamber (10). According to such an embodiment, a translucent, or transparent material may be used as this portion (160). However, it is to be understood that this portion (160) may be wholly eliminated and need not be present within the bait chamber cover (18).

Turning now to Fig. 3, there is depicted the rodent bait station (10) discussed with reference to Figs. 1 and 2. As can be seen from Fig. 3, the rodent bait station (10) is illustrated in a first closed position. According to this first closed position, the passage cover portion (16) of the two-part cover (14) is in a locked position with respect to the base (12). This is achieved by rotating at least the passage part (16) about hinge (36) until the front margin (40) of the passage cover (16) is in close proximity with, or is coincident with the top margin (80) of the inner wall (70). In this first closed position the rodent passageway (120) is defined. As also can be seen, the rodent passageway (120) is interrupted by the inner portal (72) which opens upon the interior of the bait matrix chamber (60). According to this embodiment, the snap-lock tabs (110, 112) act to lock the passage cover (16) to the base (12) of the rodent bait station (10) by passing through corresponding slots (not visible in Fig. 3) in the base (12), with the snap-lock tabs (110, 112) flexing backward as the slot pushes against the angled flat surface of the hook portions of the snap-lock tabs (110, 112), and snapping forward once the hook portions have cleared the slots, producing an arrangement which prevents the flexible locking tabs (110, 112) from backing out of their respective slots (not visible in Fig. 3) in the event that moderate pulling force is applied to separate the passage cover (16) from the base (12) of the rodent base station (10).

Once the rodent passageway (120) is formed, the bait can be properly placed on the floor (28) inside the bait matrix chamber (60). This insures proper placement of the bait in the rodent bait station (10). Thus, there is a reduced likelihood of the bait being incorrectly placed elsewhere in the rodent bait station (10), making it a safer bait station.

Also seen from Fig. 3 is a safety key (250) at least partially inserted into the upper lock portion (106) of the lock (100).

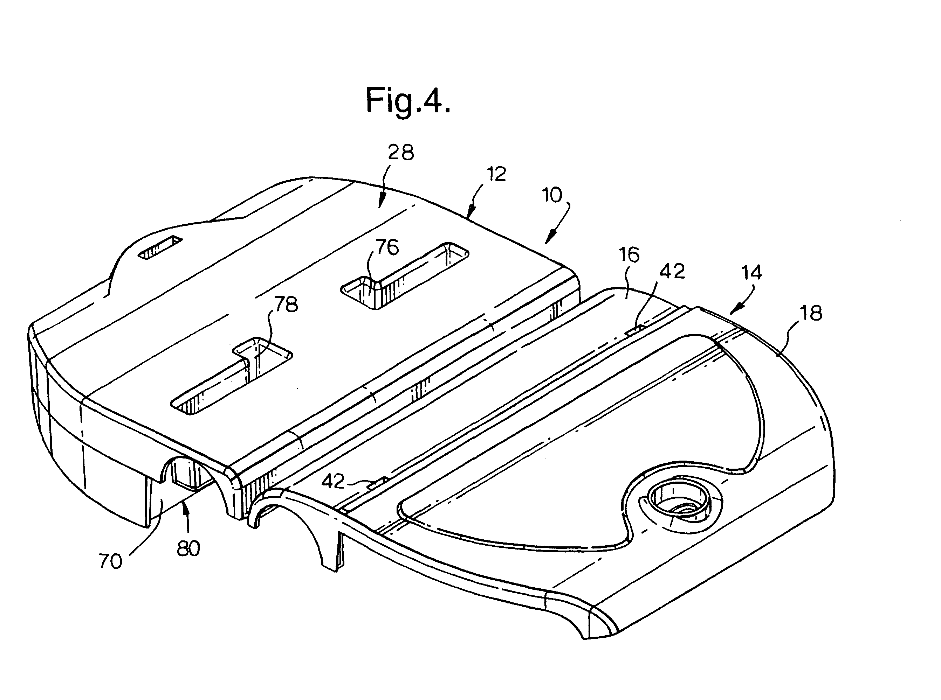

Turning now to Fig. 4, there is depicted an underside view of the rodent bait station (10) in its fully open position as per Fig. 2. As can be seen more readily in this depiction, the passage cover (16) and the bait chamber cover (18) of the two-part top cover (14) are hingedly attached to one another by a rotatable hinge (42). In this depiction, a living hinge is depicted. However, again it is to be understood that any other hinging method or device might also be used in its place, such as a conventional knuckle-type hinge. Posts (76, 78) can also be seen from the underside of the base (12). As can also be seen in this embodiment, the posts (76, 78) are essentially symmetrical in their configuration. The posts (76, 78) extend from the floor (28) until they terminate coincidentally with the top margin (80) of the inner wall (70).

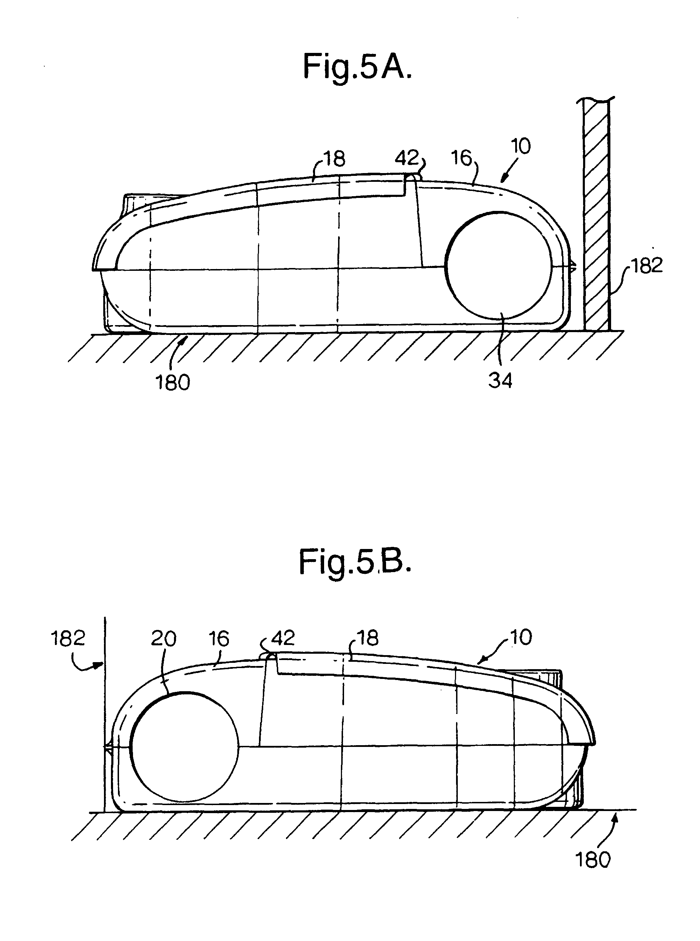

Turning now to Figs. 5A and 5B, thereon are depicted respectfully the right side view and left side view of the rodent bait station (10) in its fully closed position with respect to a floor (180) and a wall (182). As can be understood with reference to Figs. 5A, 5B, the rodent bait station (10) is particularly adapted to be placed in a comer defined by a wall and a floor. It is known when rodents traverse a room or other open space, they very rarely will cross through the center part of a floor. Rather, rodents prefer to slink along a wall. A particular advantage of the rodent bait station according to the present invention lies in the fact that it is readily adapted to be used in the placement depicted in Figs. 5A and 5B and also, is more likely to be effective than many other prior art designs when placed in such a comer between a wall and a floor. With regard to its relative placement, as can be clearly understood from a review of Figs. 5A and 5B, under most circumstances, there is no need to fully open the rodent bait station (10) once it is positioned such as depicted in these figures. Rather, it is only generally expected that from time to time, only the bait chamber cover (18) need be opened in order to periodically inspect and/or replenish the bait matrix chamber with an appropriate rodenticide laced bait matrix. There is little need, if ever, to disassemble the rodent passageway (120) of the rodent bait station (10) by opening the passage cover (16). The rodent bait stations (10) according to the present invention are particularly easy to use and are particularly adapted to be used in such a tight placement as when opened to replenish the bait, no part of the rodent bait trap (10) need hit the wall (182) or otherwise requires removal and/or repositioning of the rodent bait station (10). A second advantageous feature of the rodent bait stations according to the invention are the fact that the portals (20, 32) are positioned in the natural transit path of rodents and, that the rodent passageway (120) is linear. A rodent, skulking along the comer between a wall and floor, upon encountering the rodent bait stations (10) according to the present invention are much less likely to seek to clamber over the rodent bait station, or to go around the front of the bait station. Rather, the rodent encountering the rodent bait stations (10) can readily see through the rodent passageway (120) and through the opposite portal and thus are much more likely to continue their normal, wall-hugging, straight line movement. This, of course, increases the likelihood that once entering into the passageway (120), the rodents will be attracted to the rodenticide laced bait matrix found within the bait chamber (60). Hopefully, once encountered, the same rodent will return to the rodenticide bait matrix for repeated feedings and thus assure its own demise.

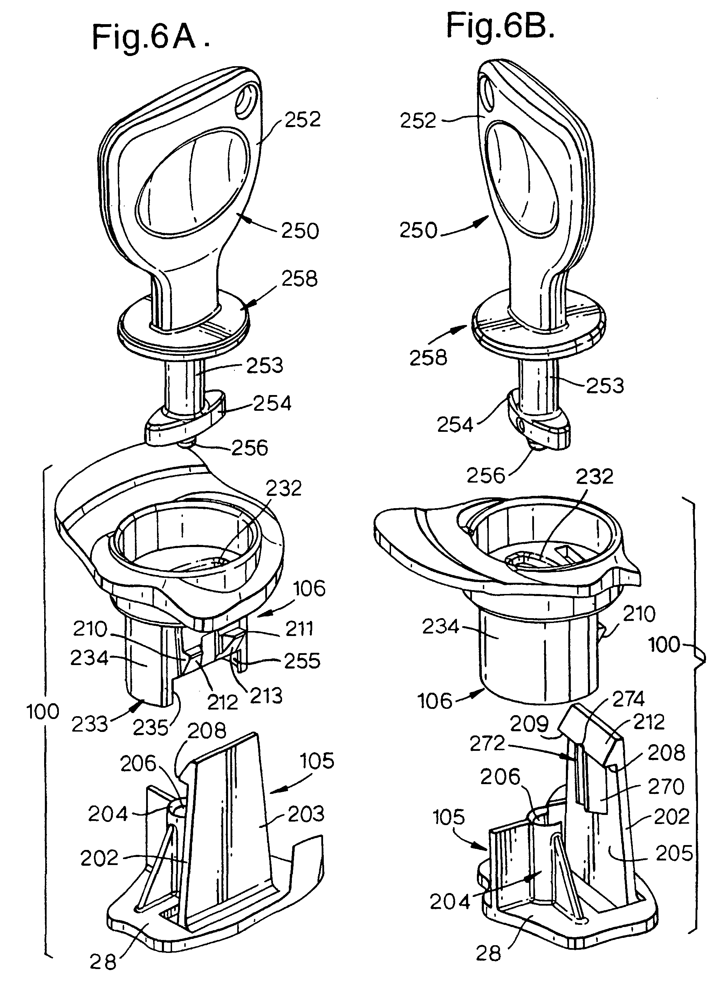

Figs. 6A and 6B present two views of a preferred embodiment of a lock (100) according to the present invention. As can be seen, the lock (100) comprises two parts, a lower lock portion (105) and an interlocking upper lock portion (106). The lower lock portion (105) is ideally integrally molded or otherwise affixed to the base (12) of the rodent bait station. The lower lock portion (105) includes a latch plate (202) and a pilot boss (204) which includes a guide channel (206) therein. Although not shown in this embodiment, one or more longitudinal ribs can be placed, running from the floor (28) up along the side (203) of the latch plate (202) opposite the side (205) occupied by the latch hooks (208, 209), to increase the stiffness of the latch plate (202), and thus of the entire lock (100). When the lock (100) is being unlocked, the latch plate (202) is deflected away from the pilot boss (204), and upper lock (106) is pulled away along with the bait chamber cover (18). Conversely, when lock (100) is once again locked, upper lock (106) is lowered so that the common angled flat portion (212) of the two latch hooks (208, 209) begins to to slidably communicate with the separate angled flat portions (212, 213) of corresponding latch hooks (210, 211) of the upper lock portion (106). The upper lock portion (106) is either integrally formed with, or is affixed to the bait chamber cover part (18) of the rodent bait station (10). The upper lock portion (106) includes a keyhole (22) through which may be inserted a safety key (250) which includes a gripping part (252), a limiting skirt (258), a shaft (253), and an unlocking part (254). Preferably, the key (250) also includes a terminal pin (256) extending from the unlocking part (254), and axially aligned with the shaft (253). A shroud (234) depends linearly downward from the upper lock portion (106), forming a key chamber (255). As depicted in Figs. 6A and 6B, the unlocking part (254) of the key (250) is seen to have the configuration of an elliptical cam, however, other configurations may also be substituted therefore. Also, while not essential, a limiting skirt (258) positioned between the gripping part (252) and the unlocking part (254) of the key is also depicted. This limiting skirt (258) limits the depth of insertion of the key (250) within the keyhole (22).

When the terminal pin (256), unlocking part (254) and shaft (253) of the key (250) are inserted through the keyhole (22) to the depth allowed by the limiting skirt (258), the shaft (253) will be entirely enclosed within the enclosure (255) created by the shroud (234), and to the extent that the unlocking part (254) has not been caused to rotate through the shroud cutout (235) and thereby protrude beyond the shroud (234), it too will be enclosed within the enclosure (255) created by the shroud (234), and will be in a fully inserted position such that the unlocking part (254) is entirely below the level of the latch hooks (210, 211). Also, at this depth of insertion, the terminal pin (256) of the key (250) will extend far enough through the enclosure (255) created by the shroud (234) that it will extend past the lower margin (233) of the shroud, and will pass within the guide channel (206) of the pilot boss (204), ensuring proper alignment of the inserted key (250) and the unlocking part (254) within the key chamber (255). In the event the key (250) is rotated when at this depth, a portion of the locking/unlocking part (254) will be caused to rotate through the shroud cutout (235) and protrude outside the confines of the shroud (234), i.e., out from under the latch hooks (210, 211) (see Fig. 3). In an embodiment, the key chamber (255) formed within the shroud (234) has a circular cross-section, an arrangement which, in cooperation with the terminal pin (256) and the guide channel (206), ensures that the key will rotate smoothly and that the rotational axis of the key shaft (253) and the rotational axis of the key chamber will remain aligned through 360 degrees of key rotation. In other embodiments, a flat portion is interposed in the key chamber (255) opposite the shroud cutout which truncates the otherwise circular cross-section (see Fig. 7 and accompanying text for a description of the arrangement and its advantages).

With regard now to the operation of the lock (100) depicted in Figs. 6A and 6B, locking is achieved by hingedly lowering the bait chamber cover (18) so that it closes upon the base (12) of the rodent bait station (10). During a portion of the arc described by the bait chamber cover (18) as it is so lowered, the respective angled flats (212, 213) of the upper lock portion latch hooks (210, 211) are caused to slide against the common flat (212) of the latch plate latch hooks (208, 209), causing the latch plate (202) to gradually deflect away from the pilot boss (204), until the upper lock portion latch hooks (210, 211) are caused to extend below the latch plate latch hooks (208, 209), thereby causing the latch plate (202) to snap back in the direction of the pilot boss (204), and causing corresponding latch hooks (208 and 210, 209 and 211) to engage, producing positive locking. Unlocking is readily performed, but only by utilizing the safety key (250). To unlock, the key (250) is inserted into the keyhole (22), to the extent permitted by the limiting skirt (258). The key (250) is then rotated within the key enclosure (255) formed by the shroud (234) in either a clockwise or counter-clockwise direction, causing the unlocking part (254) to contact and push against the latch plate (202), causing the same to deflect away from the pilot boss (204), and causing disengagement of the latch hooks (208 from 210, 209 from 211). Thereafter, while the key (250) is in place, the bait chamber cover (18) may be pivoted about the hinge (42) and lifted away from the base (12). To facilitate this operation, according to a preferred embodiment, on the interior face of the latch plate (202), there are provided a left ramp section (270) and a right ramp section (272) which ramps are intersecting but interrupted by a release channel (274). The function of these ramps (270, 272) is to engage an end of the elliptically-shaped cam of the unlocking part (254), and to facilitate the deflection of the latch plate (202) until that end of the elliptically-shaped cam is engaged within the release channel (274). This indicates to the key holder that the lock (100) is now disengaged, and that the bait chamber cover part (18) may now be hinged open.

Proceeding to Fig. 7, another preferred embodiment of the present invention is shown in a fully-open view of the rodent bait station, shown from a downward-looking perspective rotated exactly 180 degrees from the perspective of Fig. 2. In this embodiment, a flat (216) bounded by two fillets (218, 220) interrupts the otherwise circular cross-section of the key chamber (255). The unlocking part (254) of the safety key (250), when it is turned in the upper lock portion (106) of this configuration, will be urged to one side by the flat (216) and fillets (218, 220) (i.e., the shaft (253) of the key (250) and the axis of the key chamber (255) will be intentionally misaligned). As such the portion of the unlocking part (254) which extends a certain distance out of the shroud cutout (235) (see also Fig. 3) will extend still further out of the shroud cutout (235), thus urging the latch plate (202) to deflect that much further away from the pilot boss (see also Fig. 6B), ensuring positive clearance for the disengaging latch hooks (208, 209, 210, 211). To take advantage of the more vigorous unlocking scheme of such a configuration, the latch hooks (208, 209, 210, 211) can alternatively be made larger and more substantial, thus creating a stronger lock (100)

Also in the embodiment of Fig. 7, guide hooks (222, 224, 226, 228, 230) are shown. These hooks facilitate alignment of the passage cover portion (16) and bait chamber cover portion (18) of the two-part cover (14) when they are being individually hinged down onto corresponding portions of the base (12). Also, the hooks (222, 224, 226) securely hold the downwardly-extending front margin (48) of the bait chamber cover (18) in close overlapping proximity with the front wall (30) of the base (12) when the bait chamber cover (18) is secured against the base, supporting the function of the lock, which could be compromised if the two edges could be pried apart easily. This added measure of security is achieved by the upper edge of the front wall (30) of the base (12) being overlapped by the lower edge of the downwardly-extending front margin (48) of the bait matrix cover (18) along the external surface of the front wall (30), and by the inner surface of the front wall (30) being urged to stay close to the front edge of the downwardly-extending front margin (48) of the bait chamber cover (18) by the presence of the hooks (222, 224, 226). Also, the lateral alignment of the bait chamber cover (18) on the base (12) is assured by the small extended crosspiece (232) of the center hook (222) on the bait chamber cover (48) passing within a notch (234) in the base (12) when the cover is hinged down upon the base (12), preventing relative lateral motion between the two structures.

Also in the embodiment of Fig. 7 are shown slots (236, 238) into which the snap locking tabs (110, 112) extend when the passage cover (16) is closed against the base (12). One embodiment (not shown in Fig. 7) employs basic rectangular slots with four flat sides, with the angled flat portion of the hook of each of the snap-locking tabs (110, 112) being positioned to slide along an edge of one of the sides of their respective slots, causing the tabs to deflect, and then snap back after the respective hooks have passed through the slots. The embodiment of Fig.7 employs rectangular slots (236, 238) with small protrusions (240, 242) extending from those sides of the respective slots against which the angled flat portions of the hooks of the respective snap-locking tabs (110, 112) are positioned to slide. The presence of these protrusions (240, 242) make it extremely difficult to disengage the snap-locking tabs (110, 112) once the hooks of those tabs have slid through their respective slots (236, 238) and have snapped in place beneath the protrusions.

As will be understood, the foregoing description is directed towards certain preferred embodiments of the invention. It is to be understood nonetheless that many other embodiments may also be realized yet still fall within the confines of the present inventive teaching.

With regard to the materials of construction for the rodent bait station, it is to be understood that any suitable material which can be readily formed can be used. Ideally, however, this material is resistant to gnawing by rodents, is sufficiently durable so to withstand the use of the rodent bait station, both indoors and outdoors, and, of course, be readily and economically fabricated into the desired configuration of a rodent bait station. By way of non-limiting examples, particularly useful materials include metals, which can be readily stamped into such shapes and which are relatively economical. Further materials of construction are thermosetting and/or thermoplastic polymers which can be readily molded into the ultimate shape of a rodent bait station. Certain surfaces of the rodent bait station (10) can be made of translucent and/or transparent thermosetting or thermoplastic polymers to make certain interior portions of the bait station visible without having to open bait station. Certain surfaces of the rodent bait station, depending on the material selected (thermosetting or thermoplastic polymer) can be polished to achieve this. Ideally, the materials of construction should be opaque as it has been found that rodents prefer to travel under cover of darkness, and that a dim or dark interior of the bait station is more likely to be successful.

With regard to the rodenticidal compositions which may be used with the rodent bait stations taught herein, it is to be understood that virtually all known rodenticidal compositions can be utilized. By way of non-limiting examples they include a rodenticide laced bait composition such as cereals and grains; pellets usually prepared by extrusion or casting; wax blocks again usually prepared by extrusion or by casting, and wherein the edible material attractive to rodents is incorporated into the wax; and meal baits comprising cereals processed in various ways. These rodenticide laced bait compositions are often in the form of granules, for example pellets, generally produced by pressure compaction techniques. Such techniques include, for example, the use of roll compactors, briquetting presses, tabletting presses and the like. It is also within the purview of the invention that rodenticidal baits consisting of a core of edible material coated with an external film which itself contains a rodenticide can be used in the rodent bait stations described herein. Conveniently and preferably however cereal based baits in the form of blocks, sachets (filled with pellets), or briquettes are used in the rodent bait stations.

The rodenticide laced bait composition according to the invention may contain one or more rodenticides. The rodenticide may be any known or developed rodenticides. Examples of commercially available rodenticides include brodifacoum; difethialone; flocoumafen; bromadiolone; warfarin; cholecalciferol; chlorphacinone; diphenacoum; coumatetratyl; diphacinone and phenindione, as well as others not specifically recited herein. These rodenticides may be used singly or in mixtures of two or more individual rodenticides. Preferably, the rodenticide laced bait includes a palatability-enhancing agent. The palatability-enhancing component of the bait may include, for example, a sweetener. The sweetener may be, for example, sugar (sucrose), optionally in the form of molasses. Other sweeteners may be used and examples of such sweeteners include acesulfame-K, alitame, aspartame, cyclamate, saccharin, sucralose, sorbitol, mannitol, xylitol, thaumatin, monellin, isomalt, and isomaltulose. Many of these materials have greater sweetening power than sucrose, and if used, they will be incorporated at a concentration appropriate to their sweetening power. Other palatability-enhancing agents include animal and vegetable oils for example fish oil, and maize, peanut, and soyabean oil, and dried yeast. The amounts of the individual constituents making up the rodenticide laced bait compositions to be used will be known by a person skilled in the art, or can be determined by routine experimentation. Desirably the rodenticide laced bait compositions are ones which are observed to be palatable to rodents, so to improve the likelihood of ingestion of the rodenticide laced bait compositions, particularly repeated feeding upon the rodenticide laced bait compositions by the same rodent. The latter is particularly desired where a rodenticide necessarily requires several feedings in order to develop a cumulative lethal dose for the rodent.

It is also contemplated that other materials may be also present within the bait matrix chamber other than the bait matrix itself. For example, it is contemplated that apart from the rodenticide laced bait matrix, other non-toxic foodstuffs may be present such as grains, nuts, etc. Such alternate foodstuffs may be used independently of the bait matrix to yet nonetheless attract a rodent in transit and into the bait matrix chamber.

While the invention is susceptible of various modifications and alternative forms, it is to be understood that specific embodiments thereof have been shown by way of example in the drawings which are not intended to limit the invention to the particular forms disclosed; on the contrary the intention is to cover all modifications, equivalents and alternatives falling within the scope of the invention as expressed in the appended claims.

## Claims

1. A rodent bait station (10), comprising:
a base (12) having a first base portion and a second base portion;
a cover (14) having a first cover part (16) and a second cover part (18), adapted to selectably cover the base (12);
said first cover part (16) being adapted to selectably cover said first base portion and thereby define a passage portion;
said second cover part (18) being adapted to selectably cover said second base portion and thereby define a bait chamber portion (60);
said second cover part (18) and said first cover part (16) being hingedly attached to each other;
said first cover part (16) being hingedly attached to the base (12);
said second cover part (18) being independently hingedly openable while the first cover part (16) remains covering the first base portion; and
said rodent bait station (10) further comprising an interior sidewall (70) adapted to separate the passage portion from the bait station portion (60), and a first portal (72) through said sidewall (70).

2. The rodent bait station of claim 1, said passage portion having a second portal, and a third portal distal said second portal, said second and third portals being adapted to accommodate a traversing rodent.

3. The rodent bait station of claim 2, the shape of said passage portion between said second portal and said third portal being linear.

4. The rodent bait station of claim 1, wherein the second cover part has a downwardly extending margin adapted to overlap sidewalls of the second base portion.

5. The rodent bait station of claim 1, further comprising a first locking mechanism adapted to selectably secure the second cover part to the second base portion.

6. The rodent bait station of claim 5, wherein the first locking mechanism comprises a first latching member integral to said second cover part, and a second latching member, selectably engageable with said first latching member and integral to the base.

7. The rodent bait station of claim 6, said second cover part further having an aperture for a key, and a key adapted to be inserted within the aperture for disengaging the first and second latching members of said first locking mechanism.

8. The rodent bait station of claim 6, further comprising a second locking mechanism adapted to selectably secure the first cover part to the first base portion, said second locking mechanism including at least one flexible locking tab and a slot adapted to selectably engage said flexible locking tab.

9. The rodent bait station of claim 1, further comprising anchoring means adapted to permit said rodent bait station to be secured to a substrate.

10. The rodent bait station of claim 1, said second cover part further comprising a window portion.

11. The rodent bait station of claim 1, said hinged attachment between the first cover part and the base being located along an edge of the base distal the second base portion.

## Revendications

1. Appareil (10) à appâter des rongeurs, comportant :
une base (12) ayant une première partie de base et une seconde partie de base ;
un capot (14) ayant une première partie (16) de capot et une seconde partie (18) de capot, conçu pour recouvrir sélectivement la base (12) ;
ladite première partie (16) de capot étant conçue pour recouvrir sélectivement ladite première partie de base et pour définir ainsi une partie de passage ;
ladite seconde partie (18) de capot étant conçue pour recouvrir sélectivement ladite seconde partie de base et définir ainsi une partie (60) de chambre à appât ;
ladite seconde partie (18) et ladite première partie (16) de capot étant reliées de façon articulée l'une à l'autre ;
ladite première partie (16) de capot étant reliée de façon articulée à 1a base (12) ;
ladite seconde partie (18) de capot pouvant être ouverte indépendamment, de façon articulée, tandis que la première partie (16) de capot reste en recouvrement de la première partie de base ; et
ledit appareil (10) à appâter des rongeurs comportant en outre une paroi latérale intérieure (70) conçue pour séparer la partie de passage de ladite partie (60) d'appareil à appâter, et une première entrée (72) à travers ladite paroi latérale (70).

2. Appareil à appâter des rongeurs selon la revendication 1, ladite partie de passage ayant une deuxième entrée et une troisième entrée distale par rapport à ladite deuxième entrée, lesdites deuxième et troisième entrées étant conçues pour permettre le passage d'un rongeur se déplaçant.

3. Appareil à appâter des rongeurs selon la revendication 2, la forme de ladite partie de passage entre ladite deuxième entrée et ladite troisième entrée étant linéaire.

4. Appareil à appâter des rongeurs selon la revendication 1, dans lequel la seconde partie de capot comporte une marge s'étendant vers le bas, conçue pour chevaucher des parois latérales de la seconde partie de base.

5. Appareil à appâter des rongeurs selon la revendication 1, comportant en outre un premier mécanisme de verrouillage conçu pour fixer sélectivement la seconde partie de capot à la seconde partie de base.

6. Appareil à appâter des rongeurs selon la revendication 5, dans lequel le premier mécanisme de verrouillage comporte un premier élément d'encliquetage réalisé d'une seule pièce avec ladite seconde partie de capot, et un second élément d'encliquetage pouvant être engagé sélectivement avec ledit premier élément d'encliquetage et réalisé d'une seule pièce avec la base.

7. Appareil à appâter des rongeurs selon la revendication 6, ladite seconde partie de capot ayant en outre une ouverture pour une clé, et une clé conçue pour être insérée dans l'ouverture afin de dégager les premier et second éléments d'encliquetage dudit premier mécanisme de verrouillage.

8. Appareil à appâter des rongeurs selon la revendication 6,.comportant en outre un second mécanisme de verrouillage conçu pour fixer sélectivement la première partie de capot à la première partie de base, ledit second mécanisme de verrouillage comprenant au moins une languette flexible de verrouillage et une fente conçue pour engagement sélectif de ladite languette flexible de verrouillage.

9. Appareil à appâter des rongeurs selon la revendication 1, comportant en outre un moyen d'ancrage conçu pour permettre audit appareil à appâter des rongeurs d'être fixé à un support.

10. Appareil à appâter des rongeurs selon la revendication 1, ladite seconde partie de capot comportant en outre une partie de fenêtre.

11. Appareil à appâter des rongeurs selon la revendication 1, ladite liaison articulée entre ladite première partie de capot et la base étant située le long d'un bord distal de la base par rapport à la seconde partie de la base.

## Patentansprüche

1. Eine Nagetier-Köder-Station (10), aufweisend:
eine Grundplatte (12) mit einem ersten Grundplattenabschnitt und einem zweiten Grundplattenabschnitt;
einen Deckel (14) mit einem ersten Deckelteil (16) und einem zweiten Deckelteil (18), geeignet, um wahlweise die Grundplatte (12) abzudecken;
wobei der erste Deckelteil (16) geeignet ist, wahlweise den ersten Grundplattenabschnitt abzudecken und dadurch einen Durchgangsabschnitt zu definieren;
wobei der zweite Deckelteil (18) geeignet ist, wahlweise den zweiten Grundplattenabschnitt abzudecken und dadurch einen Köder-Kammerabschnitt (60) zu definieren;
wobei der zweite Deckelteil (18) und der erste Deckenteil (16) gelenkig miteinander verbunden sind;
wobei der erste Deckelteil (16) gelenkig mit der Grundplatte (12) verbunden ist;
wobei der zweite Deckelteil (18) unabhängig gelenkig öffenbar ist, während der erste Deckelteil (16) weiterhin den ersten Grundplattenabschnitt abdeckt; und
wobei die Nagetier-Köder-Station (10) weiterhin eine innere Seitenwand (70) aufweist, geeignet, um den Durchgangsabschnitt von dem Köder-Kammerabschnitt (60) zu trennen, und ein erstes Portal (72) durch die Seitenwand (70).

2. Nagetier-Köder-Station nach Anspruch 1, wobei der Durchgangsabschnitt ein zweites Portal und ein drittes Portal distal zum zweiten Portal aufweist, wobei das zweite und dritte Portal geeignet sind, ein durchquerendes Nagetier aufzunehmen.

3. Nagetier-Köder-Station nach Anspruch 2, wobei die Form des Durchgangsabschnittes zwischen dem zweiten Portal und dem dritten Portal linear ist.

4. Nagetier-Köder-Station nach Anspruch 1, wobei der zweite Deckelteil einen sich nach unten erstreckenden Rand aufweist, geeignet, um die Seitenwände des zweiten Grundplattenabschnittes zu überlappen.

5. Nagetier-Köder-Station nach Anspruch 1, die weiterhin einen ersten Verschlussmechanismus aufweist, geeignet, um wahlweise den zweiten Deckelteil an dem zweiten Grundplattenabschnitt zu befestigen.

6. Nagetier-Köder-Station nach Anspruch 5, wobei der erste Verschlussmechanismus ein erstes Verriegelungselement, integral mit dem zweiten Deckelteil, und ein zweites Verriegelungselement aufweist, welches wahlweise mit dem ersten Verriegelungselement in Eingriff bringbar und integral mit der Grundplatte ist.

7. Nagetier-Köder-Station nach Anspruch 6, wobei der zweite Deckelteil weiterhin eine Öffnung für einen Schlüssel aufweist und einen Schlüssel, geeignet, um in die Öffnung eingeführt zu werden zum Trennen des ersten und zweiten Verriegelungselementes des ersten Verschlussmechanismus.

8. Nagetier-Köder-Station nach Anspruch 6, die weiterhin einen zweiten Verschlussmechanismus aufweist, geeignet, um wahlweise den ersten Deckelteil an dem ersten Grundplattenabschnitt zu befestigen, wobei der zweite Verschlussmechanismus mindestens einen flexiblen Verschlussdom und einen Schlitz aufweist, geeignet, um wahlweise mit dem flexibeln Verschlussdom in Eingriff zu kommen.

9. Nagetier-Köder-Station nach Anspruch 1, die weiterhin eine Verankerungseinrichtung aufweist, geeignet, um die Nagetier-Köder-Station an einem Substrat befestigen zu können.

10. Nagetier-Köder-Station nach Anspruch 1, wobei der zweite Deckelteil weiterhin einen Fensterabschnitt aufweist.

11. Nagetier-Köder-Station nach Anspruch 1, wobei die gelenkige Befestigung zwischen dem ersten Deckelteil und der Grundplatte längs einer Kante der Grundplatte distal zum zweiten Grundplattenabschnitt angeordnet ist.
